**Europäisches Patentamt**

**European Patent Office**

**Office européen des brevets**

(11) Publication number: **0 084 873**
**B1**

# EUROPEAN PATENT SPECIFICATION

(45) Date of publication of patent specification: **16.09.87**

(51) Int. Cl.⁴: **G 02 F 1/133,** H 05 B 3/26, B 60 R 1/06

(21) Application number: **83100535.0**

(22) Date of filing: **21.01.83**

(54) **Liquid crystal display device for automotive application.**

(30) Priority: **22.01.82 JP 8490/82**

(43) Date of publication of application:
**03.08.83 Bulletin 83/31**

(45) Publication of the grant of the patent:
**16.09.87 Bulletin 87/38**

(84) Designated Contracting States:
**DE FR GB IT NL SE**

(56) References cited:
**EP-A-0 024 483**
**DE-A-2 932 252**
**DE-C- 953 318**
**DE-U-6 926 677**
**FR-A-1 477 257**
**FR-A-2 083 161**
**FR-A-2 113 586**
**FR-A-2 137 457**
**GB-A- 945 648**
**GB-A-1 498 074**
**GB-A-2 041 859**
**GB-A-2 091 528**
**US-A-3 296 530**

(73) Proprietor: **Stanley Electric Co., Ltd.**
**9-13, Nakameguro2-chome**
**Meguro-ku Tokyo 153 (JP)**

(72) Inventor: **Teshima, Toru**
**4606-4, Motoishikawacho Midori-ku**
**Yokohama-shi Kanagawa-ken (JP)**
Inventor: **Ariga, Kazuo**
**2-2-2-113, Shimoochiai**
**Shinjuku-ku Tokyo (JP)**
Inventor: **Yoshida, Mitsunari**
**4-13-8, Tsunashimanishi Kohoku-ku**
**Yokohama-shi Kanawaga-ken (JP)**

(74) Representative: **Patentanwälte Schaumburg &**
**Thoenes**
**Mauerkircherstrasse 31 Postfach 86 07 48**
**D-8000 München 80 (DE)**

(56) References cited:
**US-A-3 531 676**
**US-A-3 686 473**
**US-A-3 798 419**
**US-A-4 029 393**
**US-A-4 093 355**

Courier Press, Leamington Spa, England.

**0 084 873**

(56) References cited:

ELECTRONICS, vol. 50, no. 14, July 7, 1977 NEW YORK (US). S.E. SCRUPSKI: "Digital-display manufacturers strive to refine their technologies", pages 96-103.

IEEE TRANSACTIONS ON INDUSTRY APPLICATIONS, vol. 1A-11, no. 2, March/April 1975, NEW YORK (US). B.N. MOORE: "Etched Foil Elements: A New Approach to Uniform Appliance Heating", pages 222-225.

# 0 084 873

## Description

This invention relates to a liquid crystal display device according to the generic part of claim 1.

The working characteristic of a liquid crystal element is greatly affected by the environmental temperature. As the temperature decreases, the responsiveness of the element lowers and when the temperature reaches approximately −30°C, this results in difficulties with respect to actual use. However, the liquid crystal element is not always used only in the normal temperature range. For example for those used as various displays for automobiles, it is desired that they also operate normally even at a temeprature of approximately −30°C.

A liquid crystal display device of the kind mentioned at the beginning is known from an article published in "Electronics" Vol. 50 (1977) on pages 96 to 103. This device has electrical heating means for the liquid crystal cell with a surface extension corresponding to that of the liquid crystal cell and is disposed on one side thereof. It consists of an electrically conductive material with a high specific resistance and forms a planar element.

In practical use it has been shown that this prior art device does not ensure uniform heating of the liquid crystal cell and affects the clear display especially at low temperatures.

Therefore, it is the object of the invention to provide a liquid crystal display device which meets the demands of automotive application, i.e. which guarantees uniform heating of the whole display area without impairing the clear display function, even at low temperatures.

This problem is solved by the features of the main claim. Advantageous further developments are described in the subclaims.

For a liquid crystal display device according to the invention a plate-like metal member having a relatively high specific resistance is subjected to etching-working to form a mesh-like heat generating portion. This, in combination with a reflecting plate and a special arrangement, has the effects that the whole area of the liquid crystal cell can be evenly heated and that a clear displaying action can be obtained even at low temperatures, which was not possible before. Furthermore, the range of utilization of the liquid crystal cell can be extended. In addition, the heater itself is formed from a thin plate and has a good light transmission and therefore the heater can be arranged on the back side of the liquid crystal cell without limitation to the position shown below. Moreover, since the heat generating portion is obtained by applying the etching treatment thereto, the size of the openings thereof or the thickness of frame portions, which form a mesh, and the like can be varied according to the purpose for use and the area of the liquid crystal cell. Furthermore, the mesh portion is integrally formed instead of being formed by connection, and therefore, there is no inconvenience in that the heat generating distribution is not concentrated on extreme portions.

It will be understood that if a plurality of liquid crystal cells are aligned, a heat generating portion can be formed only in a portion corresponding to an area of the respective liquid crystal cells.

Since the mesh-like heat generating body is disposed on the rear side of the liquid cell, it is possible to prevent a display pattern of the liquid crystal cell from being seen from the outside when a lamp is not lit. The mesh-like heat generating body and the transparent reflecting plate can be laminated together by an ultraviolet hardening type adhesive to provide an integral configuration.

The present invention will now be described with respect to an embodiment shown in the drawings in which

Fig. 1 shows a front view of the heater used in a liquid crystal display device,

Fig. 2 shows an enlarged part of the heater,

Fig. 3 shows a front view of a terminal portion of the heater,

Fig. 4 shows the right hand view of a terminal portion shown in Fig. 3, and

Figs. 5 and 6 show a sectional view of a liquid crystal display device during practical use.

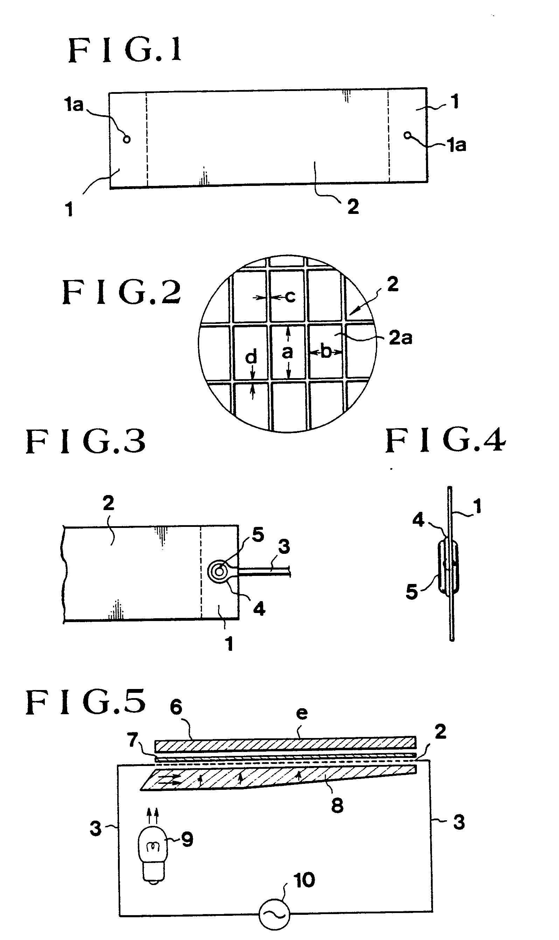

Fig. 1 is a front view of a heater used in a liquid crystal display device. The heater consists of a conductive material which has a high specific resistance, for example, such as stainless, nichrome or nickel-chrome iron alloy. The heater is formed into a substantially parallelogram and comprises terminal portions 1,1 on opposite ends thereof and a mesh-like heat generating portion 2 formed in the whole area except said terminal portions 1,1. The heat generating portion 2 is shown in detail in Fig. 2 and has a mesh-like form as shown in order to uniformly heat the whole surface area of the liquid crystal cell, which will be described later.

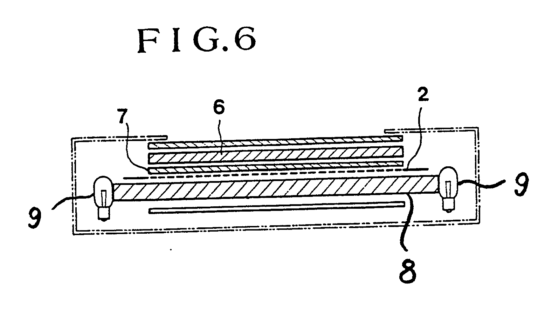

As shown in Figs. 3 and 4 in detail, the terminal portions 1,1 have spaces for connections of conductive lead wires 3, and the lead wires 3 are connected in openings 1a,1a (see fig. 1) bored therein to form conductive paths. Ring-like washers 4 are connected to the ends of the lead wires 3, which are respectively connected to said openings 1a,1a by caulking through eyelets 5.

It will be noted that the shape of the heater can be formed in correspondence to the shape of the liquid crystal cell used. If the liquid crystal cell is, for example, square, the heat generating portion 2 is also formed into a shape corresponding thereto.

Figs. 5 and 6 show sectional views of a liquid crystal display device with a heater of the kind described. Reference numeral 6 designates a liquid crystal cell, 7 a semi-permeable reflecting plate, 8 a photo-guide where the liquid crystal cell 6 is displayed by back illumination, and 9 a light source for the back

3

illumination. The heat generating portion 2 of the heater is interposed between the reflecting plate 7 and the guide plate 8. Reference numeral 10 designates a power source for the heater.

Accordingly, in the heater of the present invention, it is possible to substantially uniformly heat the whole area of the liquid crystal element 6 and therefore, it is possible to obtain a clear display even under the environment of low temperature without producing phenomena such as irregularities in display. Particularly, the heat portion 2 is formed into a mesh-like configuration, and therefore, it is advantageous in that no inconvenience occurs which intercepts the light illuminated from the light source 9.

Embodiment 1

A stainless plate (SUS-304) having plate thickness 40 µm, width 115 mm and length 245 mm was subjected to etching working to form mesh-like openings 2a (see Fig. 2). This opening has dimensions of a=1.38 mm, b=0.69 mm and c, d=0.064 mm.

The heater thus obtained was arranged as shown in Fig. 5, and left alone under the environment of −30°C for sufficient cooling and thereafter, the temperatures of the liquid crystal cell 6 were measured to obtain the following results. An applied voltage was 12 V, and a consumed power was 130 W.

| Time of passage (sec.) | 0 | 80 | 120 | 180 |
|---|---|---|---|---|
| Surface temperature of liquid crystal cell (°C) | −30 | 0 | +12 | +33 |

Note)

The surface temperature of the liqucd crystal cell was measured at point e of Fig. 5.

Embodiment 2

A stainless plate (SUS-304) having a plate thickness 30 µm was used to form a heat generating portion 2 similar to the former, and the measurement was performed to obtain the following results. An applied voltage was 12 V and a consumed power was 90 W. The temperature of the liquid crystal cell was measured at the same position as that of the previous case.

| Time of passage (sec.) | 0 | 80 | 120 | 180 |
|---|---|---|---|---|
| Surface temperature of liquid crystal cell (°C) | −30 | −30 | +5 | +20 |

In either case, it was possible to obtain the elements which provide an excellent responsiveness and clear displaying action in a few minutes after commencement of conduction. Since the heat generating portion 2 is formed into a mesh-like form, a good light transmission is provided. The transmission was 97% in the afore-mentioned example. Accordingly, even in the case which requires the back illumination, shielding is not necessary.

**Claims**

1. A liquid crystal display device for automotive application, comprising a liquid crystal cell (6) as a display element and electrical heating means (2) for the liquid crystal material, said heating means (2) having a surface extension corresponding to that of the liquid crystal cell (6) and being a planar element of an electrically conductive material with a high specific resistance disposed outside said liquid crystal cell (6) on one side thereof, characterized in that said heating means (2) has a mesh-like configuration of evenly distributed openings and is laminated together with a reflecting plate (7) forming an integral configuration therewith, said reflecting plate (7) lying between said heating means (2) and said liquid crystal cell (6).

2. The device of claim 1, characterized in that said heating means (2) consists of stainless steel, nickel-chrome or a nickel-chrome-iron alloy.

3. The device of claim 1 or 2, characterized in that the openings of said mesh-like configuration are so dimensioned that they cover 97% of its surface.

4. The device of claim 3, characterized in that the conductive portions separating said openings are 0.064 mm wide.

4

# 0 084 873

**Patentansprüche**

1. Flüssigkristallanzeigevorrichtung für Kraftfahrzeuge, mit einer Flüssigkristallzelle (6) als Anzeigeelement und einer elektrischen Heizvorrichtung (2) für das Flüssigkristallmaterial, wobei die Heizvorrichtung (2) eine Flächenausdehnung entsprechend derjenigen der Flüssigkristallzelle (6) hat und ein planes Element aus einem elektrisch leitfähigen Material mit hohem spezifischen Widerstand ist, das außerhalb der Flüssigkristallzelle (6) auf deren einer Seite angeordnet ist, dadurch gekennzeichnet, daß die Heizvorrichtung (2) eine maschenartige Konfiguration gleichmäßig verteilter Öffnungen hat und mit einer reflektierenden Platte (7) unter Bildung einer einheitlichen Anordnung schichtartig zusammengefügt ist, und daß die reflektierende Platte (7) zwischen der Heizvorrichtung (2) und der Flüssigkristallzelle (6) liegt.

2. Vorrichtung nach Anspruch 1, dadurch gekennzeichnet, daß die Heizvorrichtung (2) aus korrosionsbeständigem Stahl, Nickel-Chrom oder einer Nickel-Chrom-Eisen-Legierung besteht.

3. Vorrichtung nach Anspruch 1 oder 2, dadurch gekennzeichnet, daß die Öffnungen der maschenartigen Konfiguration so bemessen sing, daß sie 97% von deren Oberfläche ausmachen.

4. Vorrichtung nach Anspruch 3, dadurch gekennzeichnet, daß die die Öffnungen voneinander trennenden leitfähigen Abschnitte 0,064 mm breit sind.

**Revendications**

1. Dispositif d'affichage à cristaux liquides pour application aux véhicules automobiles, comprenant une cellule à cristaux liquides (6) comme élément d'affichage et un moyen de chauffage électrique (2) de la matière à cristaux liquides, ce moyen de chauffage (2)·ayant une surface dont la grandeur correspond à celle de la cellule à cristaux liquides (6) et étant un élément planaire de matière électriquement conductrice à résistance spécifique élevée disposé extérieurement à ladite cellule de cristaux liquides sur un côté de cette dernière, caractérisé en ce que ledit moyen de chauffage (2) a la configuration d'une grille à ouvertures réparties également et elle est laminée avec une plaque réfléchissante (7) formant partie intégrante de sa configuration, cette plaque réfléchissante (7) se trouvant entre ledit moyen de chauffage (2) et ladite cellule de cristaux liquides (6).

2. Dispositif de la revendication 1 caractérisé en ce que le moyen de chauffage (2) est composé d'acier inoxydable, de nickel-chrome ou d'un alliage nickel-chrome-fer.

3. Dispositif de la revendication 1 ou 2 caractérisé en ce que les ouvertures de ladite configuration de grille sont dimensionnées de telle sorte qu'elles couvrent 97% de sa surface.

4. Dispositif de la revendication 3 caractérisé en ce que les parties conductrices séparant lesdites ouvertures ont 0,064 mm de large.

**0 084 873**

FIG.1

FIG.2

FIG.3

FIG.4

FIG.5

# 0 084 873

# F I G.6

2